# FASCICULE DE BREVET EUROPEEN

(11) **EP 1 051 317 B1**
(45) Date de publication et mention de la délivrance du brevet: **31.07.2002**
(21) Numéro de dépôt: 99900989.7
(22) Date de dépôt: 22.01.1999
(51) Int. Cl.: B60T 13/66, B60T 15/14

(54) **PROCEDE DE TELECOMMANDE DE DISTRIBUTEURS DE FREINAGE ET DISTRIBUTEURS POUR LA MISE EN OEUVRE DE CE PROCEDE**
VERFAHREN ZUR FERNSTEUERUNG VON BREMSKRAFTVERTEILERN UND BREMSKRAFTVERTEILER ZUR AUSFÜHRUNG DIESES VERFAHRENS
METHOD FOR REMOTE CONTROL OF BRAKE VALVES AND BRAKE VALVES FOR IMPLEMENTING SAME

(30) Priorité: 30.01.1998 FR 9801099
(43) Date de publication de la demande: 15.11.2000
(73) Titulaire: SAB WABCO S.A., 93270 Sevran (FR)
(72) Inventeur: GRENIER, Michel, F-77400 Pomponne (FR)
(74) Mandataire: Cabinet Hirsch
(86) Numéro de dépôt international: FR9900133
(87) Numéro de publication internationale: WO9938742

(56) Documents cités:
- DE-A- 4 442 516
- US-A- 4 013 323
- US-A- 4 056 286

## Description

La présente invention concerne un procédé de télécommande simultanée des distributeurs ou valves de freinage d'un train de véhicule, dans lequel les différents véhicules du train sont munis chacun d'un distributeur de pression de freinage actionné et commandé par les variations de pression d'une conduite générale de freinage. Elle s'applique également à des distributeurs de pression de freinage aptes à être télécommandés. pour un véhicule destiné à être inséré dans un train de véhicule, ledit distributeur étant susceptible d'être relié à au moins une conduite générale de freinage, à un réservoir auxiliaire d'accumulation de fluide sous pression, et directement ou par l'intermédiaire d'au moins un relais, à un organe de freinage à pression de fluide.

Le freinage pneumatique des trains de voyageurs et de marchandises est réalisé à l'aide d'une conduite générale de freinage qui court tout le long du train au moyen de conduites flexibles de raccordement entre les véhicules, depuis la locomotive ou le véhicule conducteur de tête. Cette conduite générale est maintenue sous une pression de régime (définie à 5 bars par l'Union Internationale des Chemins de fer UIC) depuis le véhicule de conduite, par l'intermédiaire d'une source d'alimentation telle qu'un compresseur, associée à un détendeur de pression préréglé. Pour provoquer un freinage, on fait diminuer rapidement et de façon brutale ou graduée la pression régnant dans cette conduite générale, et pour provoquer le desserrage des freins, on fait remonter la pression jusqu'à la pression de régime et même légèrement au-delà pour faciliter le desserrage en queue de train. Un tel freinage est considéré comme pratiquement inépuisable car, pour la pression de freinage maximale, une pression non négligeable (3.5 bars d'après l'UIC) persiste dans la conduite générale pour recharger les réservoirs auxiliaires là où se manifeste une consommation d'air comprimée (fuite au cylindre), et la remontée de la pression jusqu'à la pression de régime recharge les réservoirs auxiliaires, lorsque la pression de freinage a diminué (lentement, surtout pour le matériel marchandises) jusqu'à la pression atmosphérique.

Par contre, pour les trains longs (en particulier au-delà de 750 m) et les trains rapides, l'allongement de la progression de la pression de freinage jusqu'à l'arrière du train implique un allongement inadmissible des distances d'arrêt au freinage. Pour les trains de marchandises très longs (au-delà de 1000 mètres de longueur), il apparaît des efforts longitudinaux exagérés au serrage et au desserrage et, de plus, le desserrage complet en queue de train devient difficile à obtenir en cas de consommation importante d'air comprimé. Pour les trains de voyageurs rapides, la commande électropneumatique du frein a résolu le problème au prix d'un supplément de coût et d'entretien qui paraît incompatible avec les transports des marchandises, même les transports rapides comme celui des conteneurs.

On a proposé dans DE-A-44 42516 un dispositif de télécommande d'une valve électropneumatique de freinage montée sur un wagon susceptible de produire lui-même l'air comprimé nécessaire pour le freinage. La valve électropneumatique est susceptible d'être radiotélécommandée par l'intermédiaire d'une antenne et d'un organe de télécommande. Ce dispositif de télécommande présente l'inconvénient de nécessiter des valves de freinage électropneumatiques beaucoup plus onéreuses que les distributeurs de freinage pneumatiques classiques, qui ne permettent en général pas d'inclure les véhicules ferroviaires ainsi équipés dans un train classique et qui nécessitent un circuit de commande électropneumatique alimenté depuis la locomotive.

US-A-4013 323 et 4056286 décrivent un système de télétransmission par radio de l'actionnement d'un robinet de mécanicien de locomotive à une valve de répétition à valve-relais, montée dans le fourgon de queue ou "caboose" d'un train long. Ce système permet de déclencher simultanément le serrage ou le desserrage des freins d'un train à partir de la locomotive de tête et du fourgon de queue, ce qui réduit de moitié la longueur de la conduite générale à parcourir par l'onde pneumatique de commande de la pression de freinage. Un tel système est relativement efficace pour le freinage ferroviaire utilisé en Amérique du type "à triple-valve" où le desserrage est facilité par la baisse de la référence de pression du réservoir auxiliaire mais ne convient pas pour le freinage UIC où le desserrage total des freins ne peut intervenir avant que la pression de la conduite générale locale n'ait atteint et de préférence dépassé la pression du réservoir de commande maintenue à 5 bars.

Il existe donc un besoin pour un système de télécommande du frein pneumatique des véhicules d'un train ferroviaire, et également des trains routiers qui requièrent la plus grande simultanéité possible de l'actionnement du frein d'un véhicule à l'autre, et même si possible le départ du freinage à partir de l'arrière du train, sous peine de voir se développer une tendance à la "mise en portefeuille" du ou des attelage(s) du train. Un tel système de télécommande du frein d'un train ferroviaire ou routier doit néanmoins être beaucoup moins onéreux à réaliser et à exploiter que le freinage électropneumatique connu utilisé pour le matériel voyageurs, si l'on souhaite en équiper les trains de marchandises rapides (transports rapides de colis ou de conteneurs) et/ou longs (au-delà de 1000 mètres).

A cet effet, selon l'invention, on propose un procédé de télécommande de distributeurs de pression de freinage équipant des véhicules d'un train de véhicules et comportant de façon classique un équipage principal délivrant la pression de commande de freinage par comparaison entre la pression d'un réservoir de commande agissant dans une chambre de commande à l'encontre de la pression d'une conduite générale de freinage, procédé dans lequel un ordre de freinage télécommandé provoque, de manière simultanée, dans lesdits distributeurs de pression de freinage de chacun desdits véhicules équipés du train, l'émission d'une pression de commande de freinage agissant sur un équipage principal du distributeur de sorte à provoquer son actionnement dans le sens du freinage, et dans lequel on alimente ladite conduite générale de freinage à une pression supérieure à ladite pression normale de régime pendant la durée de mise en service du freinage télécommandé et on fait revenir ladite conduite générale de freinage à ladite pression normale de régime lorsque ledit freinage télécommandé n'est plus en service.

Selon une forme d'exécution du procédé de l'invention, on mesure la décélération longitudinale du train de véhicules après l'émission de l'ordre de freinage télécommandé, afin de détecter une défaillance éventuelle du système de freinage du train au cours de la mise en service du freinage télécommandé par comparaison de la décélération mesurée avec la décélération normale à obtenir.

Selon une autre forme d'exécution du procédé de l'invention, on associe à chaque degré de freinage pouvant être sélectionné grâce à l'ordre de freinage télécommandé, une valeur minimale de décélération mesurée en deçà de laquelle on informe le véhicule de conduite du train de véhicules de l'existence d'une défaillance du système de freinage télécommandé.

La présente invention a également pour objet un distributeur de pression de freinage télécommandé, pour un véhicule destiné à être inséré dans un train de véhicules, ledit distributeur comprenant de façon classique un équipage principal délivrant la pression de commande de freinage par comparaison entre la pression d'un réservoir de commande agissant dans une chambre de commande et la pression d'une conduite générale de freinage à laquelle il est relié et qui permet l'alimentation de fluide de freinage sous pression, et le distributeur étant relié, directement ou par l'intermédiaire d'au moins un relais, à un organe de freinage à pression de fluide, et comportant une valve de contrôle de pression de freinage susceptible d'être actionnée par une télécommande placée dans un véhicule du train, par l'intermédiaire de moyens de réception et de traitement recevant les ordres de freinage émis par ladite télécommande, ladite valve de contrôle étant reliée en entrée à une alimentation en fluide sous pression et en sortie à une chambre de télécommande dudit distributeur comportant des moyens d'action et de réaction qui agissent, lorsque la chambre est mise sous pression, sur l'équipage principal dudit distributeur pour qu'il délivre une pression de commande de freinage.

Selon une autre forme d'exécution, le distributeur de pression de freinage selon l'invention, comporte un détendeur taré d'alimentation du réservoir de commande par la conduite générale de freinage pour éviter que le réservoir de commande ne soit alimenté à une pression supérieure à la pression normale de régime.

Selon encore une autre forme d'exécution du distributeur de pression de freinage selon l'invention, ledit équipage principal comporte d'une part un piston d'action et de réaction sur lequel agit la pression de sortie de ladite valve de contrôle en opposition à la pression de commande de freinage délivrée par le distributeur et, d'autre part, un piston de comparaison sur lequel agit la pression du réservoir de commande dans la chambre de commande, en opposition à la pression de la conduite générale de freinage.

Selon encore une forme d'exécution du distributeur de pression de freinage selon l'invention, ledit piston d'action et de réaction de l'équipage principal est susceptible de se désaccoupler mécaniquement du piston de comparaison lorsque ladite chambre de télécommande est mise sous pression.

D'autres buts, avantages et caractéristiques apparaîtront à la lecture de la description d'un mode de réalisation du procédé de télécommande simultanée des valves de freinage d'un train de véhicules et d'un distributeur de freinage ferroviaire apte à être télécommandé en utilisant ce procédé, description faite à titre non limitatif et en regard du dessin annexé dans lequel:

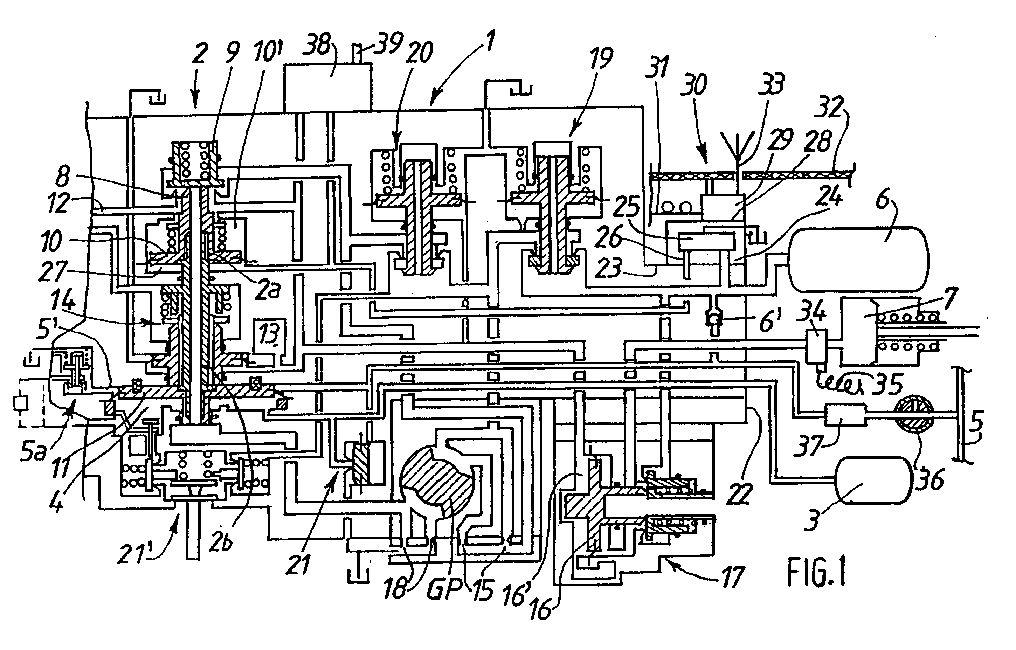

- la figure 1 unique représente schématiquement en coupe une partie (avec l'équipage principal) d'un distributeur de freinage ferroviaire apte à être télécommandé par le procédé selon l'invention, pour un véhicule destiné à être inséré dans un train de véhicules.

Le distributeur 1 de freinage ferroviaire représenté sur la figure comporte de façon classique un équipage principal 2 délivrant la pression de commande de freinage par comparaison entre la pression d'un réservoir de commande 3 agissant dans une chambre de commande 4 à l'encontre de la pression de la conduite générale de freinage 5. L'air comprimé de la conduite générale amené à l'intérieur du distributeur I assure respectivement, par l'intermédiaire d'un détendeur de pression 5a taré (par exemple à 5,4 bars), l'alimentation du réservoir de commande 3, via d'autres organes non représentés au-delà de la chambre 5', et par l'intermédiaire d'un circuit de recharge à clapet anti-retour 6' et à limiteur de débit, la recharge d'un réservoir auxiliaire 6 généralement de grande capacité car il doit assurer l'alimentation en air comprimé des cylindres de frein 7 qui sons parfois appliqués en grand nombre (freinage d'essieu multidisque).

La différence entre la pression du réservoir de commande 3 (pression maximale de la conduite générale contrôlée et mise en réserve) et la pression de la conduite générale 5 est amplifiée par l'équipage principal 2 dont le poussoir 8 coopérant avec le double clapet 9 d'isolation du réservoir auxiliaire 6 est attelé à un piston de réaction 10 de plus petit diamètre que le piston de comparaison 11 entre la pression du réservoir de commande (chambre 4) et la pression de la conduite générale (chambre 5'). Dans la position de la figure 1 qui est aussi la position du distributeur en service, la face supérieure du piston de réaction 10 est soumise à la pression de commande de freinage délivrée par le détendeur (poussoir 8 - double clapet 9) de l'équipage principal 2, tandis que la face inférieure du piston 10 est normalement mise à l'atmosphère. La pression de commande de freinage qui agit dans de nombreuses valves auxiliaires: en 12 pour la coupure de l'alimentation du réservoir de commande, dans la chambre 13 pour la temporisation du fonctionnement de la valve d'accélération 14, vient s'appliquer en étant soumise à l'amont à l'action d'étranglements de temporisation au serrage 15, sur le piston d'actionnement 16 d'un relais 17 d'alimentation des cylindres de frein 7. Le relais simple 17 peut être accouplé à ou remplacé par un relais autovariable, par exemple en fonction de la charge et/ou de la vitesse, de sorte que la pression de freinage effective dans le ou les cylindres de frein 7 est en général différente de la pression de commande de freinage délivrée à la chambre de réaction 10.

Le relais 17 qui se présente en éléments rapportés sur le distributeur 1, est alimenté en air comprimé directement depuis le réservoir auxiliaire 6. On notera que l'on a également représenté sur le schéma du distributeur de freinage 1: un jeu d'étranglements d'échappement 18 (le choix des étranglements 15 et 18 est déterminé par l'actionnement d'un levier extérieur GP/régime marchandises - régime voyageurs). une valve 19 de limitation de la pression maximale de freinage et une valve d'à-coup 20 assurant un préremplissage à grand débit des cylindres de frein, ainsi qu'une valve 21 de commande de purge par mise en dépression de la conduite générale et des valves de purge 21' à commande manuelle.

Selon l'invention, le piston de réaction 10 avec son poussoir 8 d'alimentation et d'échappement est susceptible de se désolidariser mécaniquement, par une liaison d'appui coulissante 2a, de la tige d'attelage creuse 2b de l'équipage principal 2 et le distributeur de pression de freinage 1 est équipé, soit par l'intermédiaire de son interface 22 de montage, soit sur une face de réception 23 spécialement aménagée, d'une valve 24 de contrôle de pression de freinage. La valve de contrôle 24 connue en soi au moins en partie, comporte un générateur de pression à détendeur 25 qui est alimenté en air comprimé directement par le réservoir auxiliaire 6 et dont la sortie est reliée, à l'intérieur du corps du distributeur 1, à une chambre de télécommande 27 qui est formée à la partie inférieure du piston de réaction 10. La chambre de télécommande 27 est parfaitement isolée, par le piston 10, de la chambre de réaction 10' où règne la pression de freinage et, par un joint torique, de la valve d'accélération 14.

La valve de contrôle 24 qui comporte des liaisons pneumatiques avec le réservoir de commande 6 et avec la chambre de télécommande 27, est par ailleurs reliée électriquement par une interface 28 à une unité électronique 29 de traitement de la télétransmission, pour former un bloc de télécontrôle 30. L'unité électronique 29 est reliée à une alimentation électrique (qui peut servir également à alimenter la partie électrique de la valve de contrôle 24) dont seul le fil 31 est représenté et qui peut être constituée par une batterie de relativement faible capacité et qui pourrait, en conséquence, être rechargée par un fil courant depuis le véhicule de conduite. L'unité électronique 29 qui peut comporter une unité de traitement informatique, est normalement reliée à un bus électronique 32 de transmission de données depuis le véhicule conducteur du train. On a représenté à titre de variante ou de commande supplémentaire une antenne 33 de réception hertzienne reliée à l'unité 29. Lorsque la valve de contrôle 24 est reliée à un ou plusieurs fils électriques d'alimentation du détendeur 25 courant le long du train et assurant, le cas échéant, une boucle de retour, l'unité électronique 29 pourrait être supprimée, les fils d'alimentation assurant directement la commande du détendeur 25. On remarquera que le ou les cylindres de frein 7 peuvent être reliés au relais d'alimentation 17 par l'intermédiaire de valves d'antienrayage 34 à contrôle électronique (fil 35) et qui sont susceptibles, en cas de tendance au blocage des roues du véhicule pendant le freinage, de provoquer par une succession de purges et de réalimentations des cylindres de frein, une consommation importante d'air comprimé en provenance du réservoir auxiliaire 6. On rappelle que la conduite générale 5 qui court de la tête à la queue du train est représentée schématiquement sur la figure par un branchement en T, et est reliée à l'intérieur du distributeur 1, via un robinet d'isolement 36 et un filtre 37.

La mise en oeuvre du procédé de télécommande de distributeurs de freinage s'effectue de la façon qui va être décrite. Dans les distributeurs de freinage aptes à être télécommandés selon l'invention, la valve 24 de contrôle de pression de freinage, lorsqu'elle est dépourvue d'alimentation électrique et/ou d'action de télécommande, met à l'échappement la chambre de télécommande 27. Lorsque des véhicules ferroviaires équipés de distributeurs de freinage à télécommande selon l'invention sont inclus dans un train long et/ou rapide dont on souhaite accélérer le freinage au maximum sans provoquer de réaction exagérée entre les véhicules. la valve 24 de contrôle de pression de freinage est reliée par son unité électronique 29 et par la ligne informatique 32 (ou la liaison hertzienne 33) à une télécommande générale du freinage, non représentée sur la figure unique et existant sur le véhicule de conduite du train. Le branchement électrique (fil 31) de l'unité électronique 29 et de la valve de contrôle 24 est relié la batterie ad hoc transportée par le véhicule ferroviaire. De son côté, le distributeur 1 est relié normalement à la conduite générale de freinage 5 pour être alimenté en air comprimé. On notera ici que les moyens de télécommande du freinage existant dans le véhicule de conduite peuvent comporter un réglage spécial du détendeur à grand débit de réalimentation de la conduite générale 5, ce réglage spécial faisant passer, en cas de mise en service de la télécommande du freinage, la pression de la conduite générale de la valeur de régime de 5 bars (et 5,4 bars pour un à-coup de desserrage des freins) à une valeur de, par exemple, 6 bars ou plus, facilitant la recharge des réservoirs auxiliaires, fortement sollicités pendant la télécommande du freinage.

Lorsque le conducteur du train déclenche un ordre de freinage, par l'intermédiaire de la télécommande générale de freinage, la pression de la conduite générale 5 est maintenue à sa valeur de régime locale (5 bars ou plus préférablement 6 bars ou au-delà). L'ordre de freinage télécommandé correspond par exemple à un degré de freinage, c'est-à-dire en fait à un pourcentage de freinage maximum possible ou autorisé par chaque distributeur et transmis par le bus informatique 32, par exemple sous la forme d'un signal analogique, mais plus préférablement sous la forme d'un signal logique ou numérique ou codé. Le signal peut également être transmis ou relayé (double transmission) par voie hertzienne. Le signal de freinage émis par le bus informatique 32 et/ou reçu par voie hertzienne en 33 est traité par l'unité électronique 29 pour commander le détendeur 25 qui délivre à la sortie 26 une pression de commande de freinage à la chambre de télécommande 27. La pression régnant dans la chambre 27 constitue une véritable pression image de la pression de commande de freinage, car cette pression, en agissant sur le piston de réaction 10 provoque, par l'intermédiaire du détendeur (poussoir 8 - double clapet 9) de l'équipage principal 2, la délivrance à la chambre de réaction 10' et à la valve relais de freinage 17, d'une pression de commande de freinage de même valeur que la pression image dans la chambre de télécommande 27. Lorsque le piston de réaction 10 est ainsi actionné pour ouvrir par son poussoir 8 le double clapet 9 (comme cela est représenté sur la figure mais pour un actionnement par le piston de comparaison 11, c'est à dire à partir de la conduire générale 5) il se désolidarise mécaniquement de la tige d'attelage creuse 2b et ne risque pas d'actionner la valve d'accélération 14.

Lorsque la pression délivrée par la valve de contrôle 24 diminue en correspondance avec un ordre de diminution de pression image adressé par le bus informatique 32 ou par la voie hertzienne ou par la liaison analogique par fil, la diminution de la pression régnant dans la chambre de télécommande 27 provoque, avec un léger retard, la diminution correspondante de la pression régnant dans la chambre de réaction 10', par mise à l'échappement entre le poussoir 8 et le double clapet 9. On remarquera que le distributeur de commande de freinage 1 accomplit toutes ses fonctions de régulation et de sécurité au cours de l'actionnement par télécommande de l'équipage principal. La vitesse de montée de la pression de commande de freinage dans la chambre 16' de commande du relais 17 est contrôlée par les étranglements 15, tandis que la vitesse de réduction de la pression dans cette chambre 16 est contrôlée par les étranglements 18. De même. les valves 19 de limitation de pression et 20 d'à-coup continuent à jouer leur rôle. Tous les véhicules du train actionnant simultanément le piston d'action et de réaction 20 de l'équipage principal 2 de leur distributeur de freinage, les réactions axiales entre véhicules sont réduites aux écarts de participation à la décélération générale d'un véhicule à l'autre. On ne risque plus de voir les écarts de décélération s'additionner d'un véhicule à l'autre, en particulier au desserrage. Par contre, tous les détendeurs des équipages principaux étant actionnés simultanément, tous les réservoirs auxiliaires deviennent de ce fait consommateurs d'air, par rapport à la conduite générale 5 qui n'est normalement réalimentée que depuis le véhicule de conduite. La pression à la queue de la conduite générale 5 s'établit alors à des valeurs plus faibles qu'à la tête, ce qui justifie l'augmentation de la pression de la conduite générale jusqu'à une valeur nettement supérieure à la valeur de régime normal (5 bars pour l'UIC) afin d'éviter qu'au cours d'un freinage important par la télécommande, la pression de la conduite générale en queue de train ne descende à une valeur déclenchant localement (en queue de train), le freinage, à partir de la baisse de pression de la conduite générale.

En cas de défaillance de la télécommande de freinage, le conducteur du train commande l'annulation de la télécommande, ce qui provoque le retour de la conduite générale à sa pression de régime, par exemple par un retour rapide à une pression de surcharge de 5,4 bars et un retour lent de réduction de surcharge jusqu'à la valeur de régime de 5 bars. L'annulation de la télécommande provoque également, par défaut d'excitation, le retour de toutes les valves de contrôle de pression de freinage 24 à la position d'échappement pour laquelle la conduite 26, et donc la chambre de télécommande 27, est mise à l'atmosphère. Le frein fonctionne normalement à partir de la seule commande pneumatique de la conduite générale 5. la tige d'attelage 2b de l'équipage principal venant s'appuyer sur le piston de réaction 10. La même situation prévaut si le véhicule équipé du distributeur apte à la télécommande est inclus dans un train ordinaire dépourvu de télécommande de freinage, la figure représentant le distributeur en freinage dans cette situation (commande du freinage depuis la conduite générale 5).

Dans le cas où se produirait accidentellement une superposition de la télécommande du frein et de la commande par diminution de la pression de la conduite générale, par exemple à la suite d'une rupture d'attelage au cours du freinage télécommandé ou d'une reprise d'urgence de la commande de freinage depuis la conduite générale 5, l'équipage principal pourrait recevoir deux impulsions de commande superposées, respectivement par télécommande sur le piston de réaction 10, et par la conduite générale 5 sur le piston de comparaison 11. La pression de freinage risquerait alors d'être doublée, mais heureusement intervient dans ce cas la valve de limitation 19 de la pression d'alimentation du détendeur principal (poussoir 8 - double clapet 9), qui limite la pression de freinage à la valeur maximale normale (3,8 bars selon l'UIC).

La valve 24 de contrôle de pression de freinage peut être constituée par un transducteur de pression électrique-pneumatique, de type connu, dans lequel à un courant électrique délivré par l'unité électronique de traitement de signal 29, correspond une pression pneumatique délivrée à la sortie 26. La valve 24 pourrait aussi être constituée par une série de sections pneumatiques d'action, susceptibles d'être soumises successivement à une pression de commande selon une commande numérique codée transmise par l'unité de traitement 29.

Par ailleurs, afin de permettre au conducteur d'un train long de véhicules ferroviaires équipés chacun du distributeur apte à être télécommandé avec le véhicule conducteur équipé de la télécommande générale du freinage correspondante, de détecter plus facilement une défaillance totale, mais surtout partielle, de la télécommande du frein, le véhicule de conduite du train pourrait être équipé d'un capteur de décélération longitudinale du train, bien temporisé ou rendu insensible aux oscillations parasites de décélération. Avec un tel équipement de capteur de décélération. on pourrait associer à chaque cran de la télécommande de freinage, une valeur minimale de décélération mesurée par le capteur de décélération. Le conducteur du train pourrait ainsi, depuis sa cabine de conduite, être informé rapidement de l'inefficacité totale ou partielle de la télécommande de freinage, afin de pouvoir prendre, en cas de besoin, rapidement une décision de retour à la commande de sécurité de secours du frein par la conduite générale de freinage. De même. pour permettre de détecter plus facilement une défaillance du bloc de télécommande (valve 24, unité de traitement 29), chaque distributeur 1 muni de l'équipement de télécommande pourrait comporter une valve de comparaison 38 entre la pression de sortie (en 26) de la valve 24 de contrôle de la pression de freinage et la pression de sortie du détendeur de l'équipage principal 2, apparaissant par exemple dans la chambre d'action 16' du relais 17. En réalisant un double actionnement, par la télécommande et par la conduite générale 5, on détecterait aisément ceux parmi les distributeurs 1 où aucune pression n'est générée à la sortie 26 alors que la pression de commande du freinage apparaît par suite de la commande à partir de la conduite générale 5 dans la chambre d'action 16'. La défaillance éventuelle du bloc de télécontrôle 30 serait par exemple indiquée localement sur le distributeur par l'apparition d'un repère ou téton coloré 39.

On pourrait alimenter les réservoirs auxiliaires 6 par une conduite séparée de la conduite générale 5 et dénommée conduite principale; cette conduite séparée déjà utilisée pour le matériel voyageurs est reliée au réservoir principal du véhicule de conduite susceptible d'atteindre une pression beaucoup plus élevée (jusqu'à 10 bars) que la conduite générale 5. Dans le cas de l'utilisation d'une conduite principale, il n'est plus nécessaire d'alimenter la conduite générale 5 à une pression supérieure à la pression de régime (de 5 bars et 5,4 bars en surcharge) et de prévoir un détendeur de pression taré 5a pour l'alimentation du réservoir de commande 3.

Bien entendu, la présente invention n'est pas limitée aux modes de réalisation décrits et représentés, et elle est susceptible de nombreuses variantes, accessibles à l'homme de l'art sans que l'on ne s'écarte de l'invention, telle que définie dans les revendications.

## Revendications

1. Procédé de télécommande de distributeurs de pression de freinage équipant des véhicules d'un train de véhicules et comportant, de façon classique un équipage principal (2) délivrant la pression de commande de freinage par comparaison entre la pression d'un réservoir de commande (3) agissant dans une chambre de commande (4) à l'encontre de la pression d'une conduite générale de freinage (5), procédé dans lequel un ordre de freinage télécommandé provoque, de manière simultanée, dans lesdits distributeurs (1) de pression de freinage de chacun desdits véhicules équipés du train, l'émission d'une pression de commande de freinage agissant sur l'équipage principal (2) du distributeur (1) de sorte à provoquer son actionnement dans le sens du freinage, et dans lequel on alimente ladite conduite générale de freinage (5) à une pression supérieure à ladite pression normale de régime pendant la durée de mise en service du freinage télécommandé et on fait revenir ladite conduite générale de freinage (5) à ladite pression normale de régime lorsque ledit freinage télécommandé n'est plus en service.

2. Procédé de télécommande selon la revendication 1. **caractérisé en ce qu'**on mesure la décélération longitudinale du train de véhicules après l'émission de l'ordre de freinage télécommandé, afin de détecter une défaillance éventuelle du système de freinage du train au cours de la mise en service du freinage télécommandé, par comparaison de la décélération mesurée avec la décélération normale à obtenir.

3. Procédé de télécommande selon la revendication 2, **caractérisé en ce qu'**on associe à chaque degré de freinage pouvant être sélectionné grâce à l'ordre de freinage télécommandé, une valeur minimale de décélération mesurée en deçà de laquelle on informe le véhicule de conduite du train de véhicules de l'existence d'une défaillance du système de freinage télécommandé.

4. Distributeur de pression de freinage télécommandé, pour un véhicule destiné à être inséré dans un train de véhicules, ledit distributeur comprenant de façon classique un équipage principal (2) délivrant la pression de commande de freinage par comparaison entre la pression d'un réservoir de commande (3) agissant dans une chambre de commande (4) et la pression d'une conduite générale de freinage (5) à laquelle il est relié et qui permet d'alimentation en fluide de freinage sous pression, et le distributeur (1) étant relié directement ou par l'intermédiaire d'au moins un relais, à un organe de freinage (7) à pression de fluide, et comportant une valve de contrôle (24) de pression de freinage susceptible d'être actionnée par une télécommande placée dans un véhicule du train, par l'intermédiaire de moyens de réception et de traitement (29) recevant les ordres de freinage émis par ladite télécommande, ladite valve de contrôle (24) étant reliée en entrée (25) à une alimentation en fluide sous pression et en sortie (26) à une chambre de télécommande (27) dudit distributeur (1) comportant des moyens (10) d'action et de réaction qui agissent, lorsque la chambre (27) est mise sous pression, sur l'équipage principal (2) dudit distributeur pour qu'il délivre une pression de commande de freinage.

5. Distributeur de pression de freinage selon la revendication 4, **caractérisé en ce qu'**il comporte un détendeur taré (5a) d'alimentation du réservoir de commande (3) par la conduite générale de freinage (5) pour éviter que le réservoir de commande (3) ne soit alimenté à une pression supérieure à la pression normale de régime.

6. Distributeur de pression de freinage selon la revendication 4 ou 5, **caractérisé en ce que** ledit équipage principal (2) comporte d'une part un piston (10) d'action et de réaction sur lequel agit la pression de sortie de ladite valve de contrôle (24) en opposition à la pression de commande de freinage délivrée par le distributeur (1) et d'autre part un piston de comparaison (11) sur lequel agit la pression du réservoir de commande (3) dans la chambre de commande (4), en opposition à la pression de la conduite générale de freinage (5).

7. Distributeur de pression de freinage selon la revendication 6, **caractérisé en ce que** ledit piston (10) d'action et de réaction de l'équipage principal (2) est susceptible de se désaccoupler mécaniquement du piston de comparaison (11) lorsque ladite chambre de télécommande (27) est mise sous pression.

## Patentansprüche

1. Verfahren zur Fernsteuerung von Bremskraftverteilern zur Ausstattung eines Fahrzeugfahrwerks, das herkömmlich ein Hauptgerät (2) beinhaltet, das den Bremssteuerdruck bezogen auf den Druck eines Steuerbehälters (3) abgibt und dabei in einer Steuerkammer (4) gegen den Druck einer allgemeinen Bremssteuerung (5) wirkt; Verfahren, in dem eine ferngesteuerte Bremsanweisung gleichzeitig in den Bremskraftverteilern (1) von jedem der mit dem Fahrwerk ausgestatteten Fahrzeug die Abgabe einer Bremskraftsteuerung mit Wirkung auf das Hauptgerät (2) des Verteilers (1) hervorruft, derart dass seine Betätigung in der Bremsrichtung erzeugt wird und in der man die allgemeine Bremsleitung (5) mit einem Druck versorgt, der während der Dauer der Inbetriebstellung der ferngesteuerten Bremsung (5) über dem normalen Drehzahldruck liegt und die allgemeine Bremsleitung (5) in den normalen Drehzahldruck zurückgebracht wird, wenn die ferngesteuerte Bremsung nicht mehr in Betrieb ist.

2. Verfahren zur Fernsteuerung von Bremskraftverteilern gemäß Patentanspruch 1, **dadurch gekennzeichnet, dass** die Longitudinalverzögerung des Fahrzeugfahrwerks nach Abgabe der ferngesteuerten Bremsanweisung gemessen wird, um ein eventuelles Versagen des Bremssystems des Fahrzeugfahrwerks während der Inbetriebstellung der ferngesteuerten Bremsung im Vergleich zur gemessenen Verzögerung mit der normalerweise zu erzielende Verzögerung festzustellen.

3. Fernsteuerungsverfahren gemäß Patenanspruch 2, **dadurch gekennzeichnet, dass** jede zu wählende Bremsstufe dank der ferngesteuerten Bremsanweisung ein gemessener Verzögerungsmindestwert zugeordnet werden kann, wobei bei einer Messung unter diesem Wert das Fahrzeug mit dem Fahrzeugfahrwerk von einem Versagen des ferngesteuerten Bremssystems informiert wird.

4. Ferngesteuerter Bremskraftverteiler für ein Fahrzeug, ausgelegt zum Einbau in ein Fahrzeugfahrwerk, wobei dieser Verteiler auf herkömmliche Art ein Hauptgerät (2) umfasst, das die Bremssteuerkraft über den Vergleich mit dem Druck eines Steuerbehälters (3) abgibt, der in einer Steuerkammer (4) wirkt, und der Kraft einer allgemeinen Bremssteuerung (5), mit der er verbunden ist und die Versorgung mit unter Druck stehender Bremsflüssigkeit ermöglicht, wobei der Verteiler (1) direkt oder über mindestens ein Relais mit einem Bremsorgan (7) mit Flüssigkeitsdruck verbunden ist, und ein Bremskraftkontrollventil (24) aufweist , das durch eine Fernsteuerung in einem Fahrzeugfahrwerk über Empfangs- und Verarbeitungsmittel (29) betätigt werden kann, welche die durch die Fernsteuerung abgegebenen Bremsanweisungen empfängt, wobei das Kontrollventil (24) am Eingang (25) an eine Flüssigkeitsversorgung unter Druck angeschlossen ist und am Ausgang (26) an eine Fernsteuerungskammer (27) des Verteilers (1) angeschlossen ist und dabei Wirkungs- und Reaktionsmittel enthält, die wirken, wenn die Kammer (27) am Hauptgerät (2) des Verteilers unter Druck gestellt wird, damit eine Bremssteuerkraft abgegeben wird.

5. Bremskraftverteiler gemäß Patenanspruch 4, **dadurch gekennzeichnet, dass** er ein Versorgungsdruckminderventil (5a) des Steuerbehälters (3) in der allgemeinen Bremssteuerleitung (5) enthält, um zu verhindern, dass der Steuerbehälter (3) mit einem Druck versorgt wird, der über dem normalen Drehzahldruck liegt.

6. Bremskraftverteiler gemäß Patenanspruch 4 oder 5, **dadurch gekennzeichnet, dass** das Hauptgerät (2) einerseits einen Wirkungs- (10) und Reaktionskolben beinhaltet, auf das der Ausgangsdruck des Kontrollventils (24) gegen die durch den Verteiler (1) abgegebene Bremssteuerkraft einwirkt, und andererseits einen Vergleichskolben (11), auf den der Druck des Steuerbehälters (3) in der Steuerkammer (4) gegen den allgemeinen Bremssteuerleitungsdruck (5) einwirkt.

7. Bremskraftverteiler gemäß Patenanspruch 6, **dadurch gekennzeichnet, dass** der Wirkungs- und Reaktionskolben (10) des Hauptgeräts (2) sich mechanisch vom Vergleichskolben (11) abkoppeln kann, wenn die Fernsteuerungskammer (27) unter Druck gesetzt wird.

## Claims

1. A method for remotely controlling braking pressure distributor valves equipping the vehicles of a train of vehicles and comprising, conventionally, a main item of equipment (2) supplying braking control pressure by comparison between the pressure of a control reservoir (3) acting in a control chamber (4) against the pressure of a general braking line (5) in which a remote controlled braking command brings about, simultaneously, in the braking pressure distributor valves (1) of each one of the vehicles equipping said train, delivery of a braking control pressure acting on said main item of equipment (2) of the distributor valve (1) so as to bring about its operation in the braking sense, and in which said general braking line (5) is supplied with a pressure greater than the normal operating pressure for the period of time during which said remotely controlled braking is in operation, the pressure in said general braking line (5) being caused to return to said normal operating pressure when said remotely controlled braking is no longer in operation.

2. The remote-controlling method according to claim 1, **characterised in that** the longitudinal deceleration of the train of vehicles is measured after issuing a remotely controlled braking command, in order to detect a possible failure of the train braking system during the operation of the remotely controlled braking, by comparing the measured deceleration with the normal deceleration to be obtained.

3. The remote-controlling method according to claim 2, **characterised in that** there is associated with each degree of braking able to be selected using said remotely controlled braking command, a minimum measured deceleration value below which the vehicle train driving vehicle is informed of the existence of a failure of the remotely controlled braking system.

4. A remotely controlled braking pressure distributor valve for a vehicle making up part of a train of vehicles, said distributor valve comprising, conventionally, a main item of equipment (2) supplying the braking control pressure by comparison between the pressure of a control reservoir (3) acting in a control chamber (4) and the pressure of a general braking line (5) to which it is connected and which allows pressurised braking fluid feed, said distributor valve (1) being connected directly, or via at least one relay, to a pressurised fluid braking assembly (7) and including a braking pressure control valve (24) able to be operated by a remote control located in a train vehicle, via receiving and processing means (29) receiving braking commands issued by said remote control, said control valve (24) having its inlet (25) connected to a pressurised fluid feed and its outlet (26) to a remote control chamber (27) of said distributor valve (1) including action and reaction means (10) which act, when said chamber (27) is pressurised, on the main item of equipment (2) of said distributor valve so that it delivers a braking control pressure.

5. The braking control distributor valve according to claim 4, **characterised in that** it includes a rated controlled reservoir feed (3) pressure release means (5a) via said general braking line (5) for preventing said control reservoir (3) from being supplied at a pressure greater than the normal operating pressure.

6. The braking pressure distributor valve according to Claim 4 or 5, **characterised in that** said main item of equipment (2) comprises, firstly, an action and reaction piston (10) on which the outlet pressure from said control valve (24) acts against the braking control pressure supplied by said distributor valve (1) and, secondly, a comparison piston (11) on which the control reservoir pressure (3) in said control chamber (4) acts, against the pressure of said general braking line (5).

7. The braking pressure distributor valve according to claim 6, **characterised in that** said action and reaction piston (10) of said main item of equipment (2) is designed to become mechanically decoupled from said comparison piston (11) when said remote control chamber (27) is pressurised.
